# DEMANDE DE BREVET EUROPEEN

(11) **EP 1 186 235 A1**
(43) Date de publication de la demande: **13.03.2002**
(21) Numéro de dépôt: 01402084.6
(22) Date de dépôt: 01.08.2001
(51) Int. Cl.: A01N 1/02, C12N 5/06

(54) **Dilueur pour la conservation de spermatozoides de porcins**

(30) Priorité: 11.09.2000 FR 0011524
(71) Demandeur: IMV Technologies, 61300 L'Aigle (FR)
(72) Inventeur: Saint-Ramon, Jean-Gérard, 61300 L'Aigle (FR); Desherces, Serge, 16430 Vindelle (FR); Decuadro-Hansen, Gustavo, 61550 Gauville (FR)
(74) Mandataire: CABINET BONNET-THIRION

(57) **Abrégé**

Dilueur liquide concentré pour la conservation de spermatozoïdes de porcins, caractérisé en ce qu'il contient un conservateur, une formulation antibiotique liquide, au moins un carbohydrate au moins un tampon, au moins un sel et au moins un agent antioxydant.

## Description

L'invention se rapporte à un dilueur pour la conservation de spermatozoïdes de porcins.

Une bonne hygiène de reproduction passe avant tout par les mesures de prévention qui limitent les facteurs de risque. Ces mesures concernent les locaux, les opérations liées à l'insémination artificielle, la mise bas, etc. Une telle prévention va permettre de contenir au maximum la présence de bactéries et leur développement. Celles-ci sont responsables de la contamination de la semence et de l'utérus avec des conséquences qui peuvent altérer gravement le niveau des performances d'un atelier de production porcine.

Dans le cadre de la préparation de la semence, le dilueur constitue un facteur essentiel de conservation du pouvoir fécondant des doses de semence, par sa qualité biologique et sa qualité bactériologique.

On connaît un certain nombre de dilueurs porcins en poudre. S'ils sont commodes à transporter et à stocker, ces dilueurs porcins en poudre n'en présentent pas moins de nombreux inconvénients.

Tout d'abord, ils ne peuvent pas être stérilisés.

De plus, la préparation du dilueur porcin pour l'emploi à partir d'une poudre est longue et fastidieuse. Pour un litre de dilueur porcin prêt à l'emploi; il faut en effet diluer habituellement de 50 à 60 g de poudre et les opérations de mélange et de mise en solution durent environ 10 mn et la stabilisation environ 15 mn.

Pour des raisons de stockage et de manutention, il est souhaitable de disposer d'un dilueur sous forme concentrée.

Par rapport aux dilueurs porcins en poudre connus jusqu'à présent, la préparation d'un dilueur porcin sous forme liquide concentrée est extrêmement rapide. On ne connaît cependant pas de dilueur porcin sous forme liquide concentrée et stable.

Un objet de la présente invention est de fournir un dilueur porcin sous forme liquide concentrée stable, qui ne présente pas notamment de problème de jaunissement.

Un autre objet de l'invention est de fournir un dilueur porcin pouvant être stérilisé.

Un objet de la présente invention est aussi de fournir un dilueur porcin ayant une composition antibiotique efficace envers les contaminants habituels de la semence de verrat.

D'autres objets et avantages apparaîtront à la lecture de la description ci-après.

Les dilueurs porcins connus ne permettent pas de résoudre les problèmes posés.

La plupart des dilueurs porcins connus se présentent sous forme de poudre, or il est pratiquement impossible de garantir la stérilité d'une poudre.

Par ailleurs, malgré une large utilisation de la gentamicine an tant qu'antibiotique pour la semence de verrat, des contaminations importantes peuvent se présenter après trois jours de stockage.

On ne connaît pas de dilueurs porcins qui soient à la fois sous forme liquide concentrée et stable.

Le dilueur de l'invention répond aux objets définis et pallie les problèmes ci-dessus.

Le dilueur de l'invention est sous forme liquide et concentrée. Il est caractérisé en ce qu'il contient un conservateur, une formulation antibiotique liquide, au moins un carbohydrate, au moins un tampon, au moins un sel et au moins un agent antioxydant.

Le conservateur est avantageusement choisi dans le groupe constitué des molécules sur lesquelles est greffé un acide phophatidique pour constituer un phospholipide qui est un composé des membranes cellulaires. Les conservateurs de l'invention comprennent par exemple les cyclohexanehexols, tels l'inositol, ainsi que la choline, l'éthanolamine et la sérine. L'inositol est un conservateur particulièrement préféré.

L'antibiotique liquide sera avantageusement choisi dans le groupe composé de l'enrofloxacine, et la lincomicyne et la spectinomycine. L'enrofloxacine est un antibiotique liquide particulièrement préféré.

L'enrofloxacine est l'acide 1-cyclopropyl-7-(4-éthyl-1-pipérazinyl)-6-fluoro-1,4-dihydro-4-oxo-3-quinoléine-carboxylique. Elle est commercialisée par la société Bayer sous la dénomination Baytril sous forme d'une solution à 10 %.

La lincomicyne et la spectinomycine sont commercialisées par la société Upjohn, respectivement sous les dénominations Lincocine et Trobicine.

Le carbohydrate peut être choisi dans le groupe composé des carbohydrates non réducteurs et des carbohydrates réducteurs. Parmi les carbohydrates non réducteurs, on peut citer le saccharose, tréalose et le raffinose et parmi les carbohydrates réducteurs, on peut citer le glucose (anhydre ou monohydraté) et le fructose.

Parmi les tampons, on peut citer la triméthylolméthylamine, ce tampon étant dénommé habituellement Tampon Tris ou, simplement, Tris, ainsi que le citrate trisodique et l'acide éthylènediamine-tétracétque (EDTA). Il faut noter que l'EDTA peut également faire office d'agent antiagglutinant.

Parmi les sels, on peut citer, de façon non limitative, l'acide citrique, le citrate de sodium, le chlorure de potassium, le carbonate acide de sodium.

Parmi les agents antioxydants, on peut citer les dérivés d'acides aminés tels des peptides, comme par exemple le glutation réduit, la cystéine, la N-acétyl-cystéine et la taurine.

Le dilueur selon l'invention est habituellement préparé sous forme concentrée, dénommée également "concentré". Le concentré liquide est ensuite stérilisé, par exemple par filtration sur membranes, et dilué.

Pour l'emploi, une dilution sera effectuée, en général, une dilution par dix.

Pour la dilution, on emploie de préférence de l'eau ultra pure telle de l'eau bidistillée stérile et apyrogène.

La présente invention fournit un dilueur porcin sous une forme "courte" conservation (durée de conservation 3 à 4 jours) et sous une forme "longue" conservation (durée de conservation 5 à 6 jours). La forme "courte" conservation est obtenue en diluant les composants dans de l'eau. La forme "longue" conservation est obtenue en ajoutant de l'albumine bovine (aussi dénommée BSA) à la forme "courte" conservation.

Un exemple de formule de concentré pour le dilueur de l'invention, (concentration dix fois), est donné dans le Tableau I ci-après :

**Tableau I**

| Composé | Concentration g/l de concentré |
|---|---|
| Glucose anhydre | 150-220, de préférence 170-190 |
| Saccharose | 100-150, de préférence 120-140 |
| Inositol | 60-70, de préférence 65-68 |
| Tris | 30-50, de préférence 38-42 |
| Citrate trisodique | 20-40, de préférence 28-32 |
| Acide citrique | 18-28, de préférence 20-25 |
| KCI | 5-10, de préférence 7-8 |
| EDTA | 10-15, de préférence 12-13 |
| NaHCO₃ | 10-15, de préférence 12-13 |
| N-acétyl cystéine | 1-3, de préférence 1,8-2,2 |
| Antibiotique * | |

| | |
|---|---|
| * Enrofloxacine, solution à 10 %, 100-200 µl et lincomycine/spectomycine (Linco-spectin de Upjohn), 2,5-3 ml de solution pour 100 ml de concentré. | |

Une solution concentrée (formule "courte" conservation ou concentré, dénommé aussi dans la profession "medium long term extender") de 1 litre est préparée puis divisée en 10 flacons de 100 ml. La formulation antibiotique est ajoutée à chacun des flacons de 100 ml.

Pour la formule "longue" conservation selon l'invention (dénommée aussi dans la profession "long term extender"), on ajoute du BSA au concentré, de préférence, 8-15 g/l de BSA à 1 I de concentré (solution concentrée).

La solution, de la formule "courte" ou "longue" conservation, est stérilisée par filtration sur deux membranes, par exemple, la première sur une membrane de 0,45 µm et la seconde sur une membrane de 0,22 µm.

## Revendications

1. Dilueur liquide pour la conservation de spermatozoïdes de porcins, **caractérisé en ce qu'**il contient un conservateur, une formulation antibiotique liquide, au moins un carbohydrate au moins un tampon, au moins un sel et au moins un agent antioxydant.

2. Dilueur selon la revendication 1, **caractérisé en ce que** le conservateur est choisi dans le groupe constitué des molécules sur lesquelles est greffé un acide phophatidique pour constituer un phospholipide qui est un composé des membranes cellulaires.

3. Dilueur selon la revendication 2, **caractérisé en ce que** le conservateur est dans le groupe constitué par les cyclohexanehexols, la choline, l'éthanolamine et la sérine.

4. Dilueur selon la revendication 3, **caractérisé en ce que** le conservateur est un cyclohexanehexol.

5. Dilueur selon la revendication 4, **caractérisé en ce que** le cyclohexanehexol est l'inositol.

6. Dilueur selon l'une quelconque des revendications 1 à 5, **caractérisé en ce que** l'antibiotique liquide est choisi dans le groupe composé de l'enrofloxacine, la lincomicyne et la spectinomycine.

7. Dilueur selon la revendication 6, **caractérisé en ce que** l'antibiotique est l'enrofloxacine.

8. Dilueur selon l'une quelconque des revendications 1 à 7, **caractérisé en ce que** le carbohydrate peut être choisi dans le groupe composé des carbohydrates non réducteurs et des carbohydrates réducteurs.

9. Dilueur selon la revendication 8, **caractérisé en ce que** les carbohydrates non réducteurs sont choisis dans le groupe constitué du saccharose du tréalose et du raffinose.

10. Dilueur selon l'une des revendications 8 et 9, **caractérisé en ce que** les carbohydrates réducteurs sont choisis dans le groupe constitué du glucose et du fructose.

11. Dilueur selon l'une quelconque des revendications 1 à 10, **caractérisé en ce que** le tampon est choisi dans le groupe composé de la triméthylolméthylamine, aussi dénommée Tampon Tris ou Tris, du citrate trisodique et de l'acide éthylènediamine-tétracétque (EDTA).

12. Dilueur selon l'une quelconque des revendications 1 à 11, **caractérisé en ce que** le sel est choisi dans le groupe composé de l'acide citrique, du citrate de sodium, du chlorure de potassium et du carbonate acide de sodium.

13. Dilueur selon l'une quelconque des revendications 1 à 12, **caractérisé en ce que** l'agent antioxydant est chois parmi les peptides et dérivés d'acides aminés.

14. Dilueur selon la revendication 13, **caractérisé en ce que** le dérivé d'acides aminés est choisi dans le groupe composé des peptides, de la taurine, de la cystéine et de la N-acétyl-cystéine.

15. Dilueur selon l'une quelconque des revendications 1 à 14, **caractérisé en ce qu'**il contient en outre de l'albumine bovine.

16. Dilueur selon l'une quelconque des revendications 1 à 15, **caractérisé en qu'**il a subi une stérilisation.

17. Dilueur selon la revendication 16, **caractérisé en ce que** la stérilisation est effectuée par filtration sur membranes.
